# FASCICULE DE BREVET EUROPEEN

(11) **EP 1 473 108 B1**
(45) Date de publication et mention de la délivrance du brevet: **07.05.2008**
(21) Numéro de dépôt: 03104107.2
(22) Date de dépôt: 06.11.2003
(51) Int. Cl.: B23K 33/00, B23K 26/06, B23K 26/24

(54) **Procédé de soudage laser en une passe d'un assemblage en T de pièces métalliques**
Laserschweissverfahren von Metallteilen in T-förmiger Anordnung in einen Durchgang
One pass laser welding method for a T-shaped assembly of metallic workpieces

(30) Priorité: 07.11.2002 FR 0213914
(43) Date de publication de la demande: 03.11.2004
(73) Titulaire: SNECMA, 75015 Paris (FR)
(72) Inventeur: LAUNAIS, Hervé, 91800, BRUNOY (FR); FLESCH, Thierry, 77310, PRINGY (FR); MIGNOT, Dominique, 91450, SOISY SUR SEINE (FR); ALLOUARD, Michel, 91360, EPINAY SUR ORGE (FR)
(74) Mandataire: Poulin, Gérard

(56) Documents cités:
- EP-A- 0 890 745
- DE-C- 19 521 892
- DE-C- 19 533 831
- DE-C- 19 907 926
- FR-A- 2 705 603
- FR-A- 2 789 609
- US-A- 4 691 093

## Description

### Domaine de l'invention

L'invention concerne la fixation définitive d'un assemblage de deux ou trois pièces métalliques de forme en "T", accessible uniquement sur un côté externe. Elle permet de réaliser en particulier l'assemblage d'un caisson fermé et cloisonné de faible épaisseur, tel qu'un bras de liaison placé dans le canal de flux froid, ou canal externe, placé en aval de la soufflante dans un turboréacteur.

### Art antérieur et problème posé

De tels bras ont pour fonction de raidir la structure du turboréacteur, notamment en créant une liaison entre deux enveloppes annulaires coaxiales et d'éventuellement redresser ou dévier le flux d'air froid circulant dans le canal externe. Ces bras sont des aubes métalliques constituées de préférence d'un caisson creux à l'intérieur duquel sont placés des éléments raidisseurs. De tels caissons sont difficiles à réaliser, et nécessitent de nombreuses opérations, notamment pour la fabrication des pièces primaires et la réalisation de l'assemblage et de la fixation pour mettre le caisson aux cotes déterminées.

En référence à la figure 1, par le document de brevet FR 2 705 603, on connaît un procédé de soudage laser d'un assemblage de deux pièces métalliques disposées en T. Ce procédé permet de fabriquer des caissons cloisonnés en réalisant la fixation des pièces à partir de l'extérieur des caissons. On utilise deux tirs successifs d'un faisceau laser 8A, 8B, inclinés, se croisant au niveau de la surface supérieure 1B de la pièce 1 constituant la tête de l'assemblage en T. Les deux axes de soudage laser 8A et 8B coupent deux coins supérieurs 2C de la pièce 2 faisant office de pied du T. Le dispositif de soudage est placé à l'extérieur du caisson, c'est-à-dire du côté de la surface supérieure 1B de la tête 1 du T.

Ce procédé utilise donc deux passes successives d'un faisceau laser qui provoquent chacune des déformations successives.

On peut ajouter que ce type d'assemblage nécessite un apport de matière sous forme de fils, afin d'éviter les défauts de forme après soudage. On pense en particulier aux aspérités et divers creux et caniveaux. De plus, l'investissement en outillage est relativement lourd car il exige un maintien constant des pièces l'une par rapport à l'autre et l'utilisation d'un dévidoir à fils d'apport. Enfin, lors du soudage, il est indispensable de maîtriser la position du fil.

Le but de l'invention est donc de remédier à ces inconvénients.

### Résumé de l'invention

A cet effet, l'objet principal de l'invention est un procédé de soudage au laser d'un assemblage de pièces métalliques disposées en T, le pied du T étant constitué d'une plaque à surface parallèle, l'assemblage n'étant accessible que du côté de la tête du T, par une surface externe, le procédé comportant les phases suivantes :
- assemblage en T des pièces l'une contre l'autre,
- soudage au laser de l'assemblage par la surface supérieure de la tête du T par deux soudures.

Selon l'invention, les deux soudures sont effectuées simultanément et sont parallèles entre elles et perpendiculaires à la surface supérieure de la tête du T, de manière à ce que les deux axes de soudage soient tangents chacun avec une des surfaces de la plaque formant le pied du T.

Dans une réalisation préférentielle de l'invention, les deux soudures sont effectuées simultanément avec une tête de soudage bifocale.

Dans un premier mode d'assemblage pour le soudage selon l'invention, la plaque de pied du T a des crans de longueur et d'épaisseur déterminées, l'assemblage possède une deuxième pièce constituant la tête du T et possédant des échancrures de longueurs et d'épaisseurs correspondant à celles des crans de la plaque du pied du T.

Dans ce cas, il est avantageux que la hauteur H des crans soit légèrement supérieure à l'épaisseur de la deuxième pièce de l'assemblage constituant la tête du T.

Dans une deuxième réalisation de l'assemblage en T pour le soudage selon l'invention, la tête du T est constituée de deux plaques placées perpendiculairement de part et d'autre de la plaque de pied du T, sur leur tranche.

### Liste des figures

L'invention et ses différentes caractéristiques techniques seront mieux comprises à la lecture de la description suivante de deux réalisations de l'invention. Des figures accompagnent cette description.

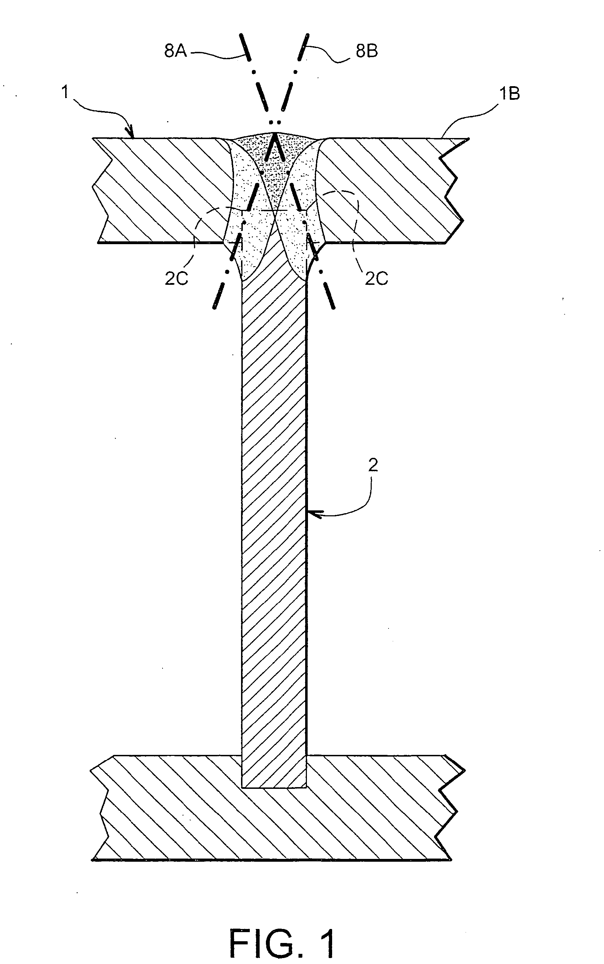

La figure 1, déjà décrite, est une coupe d'un assemblage bénéficiant d'un procédé de soudage selon l'art antérieur.

La figure 2 représente, en vue cavalière éclatée, le début du montage d'un assemblage selon une première réalisation de l'invention.

La figure 3 représente, en vue cavalière, le même assemblage que la figure 2, pendant la réalisation du soudage.

La figure 4 représente l'assemblage des figures 2 et 3, une fois terminé.

La figure 5 représente, en vue cavalière, un deuxième assemblage destiné à être soudé avec le procédé de soudage selon l'invention.

### Exposé détaillé de deux réalisation de l'invention

### Premier assemblage

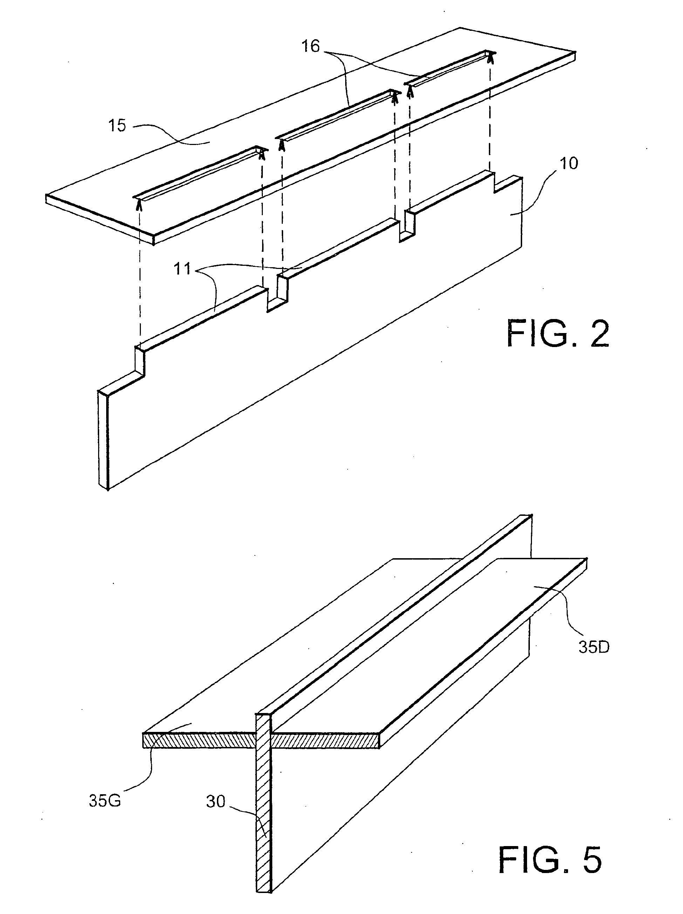

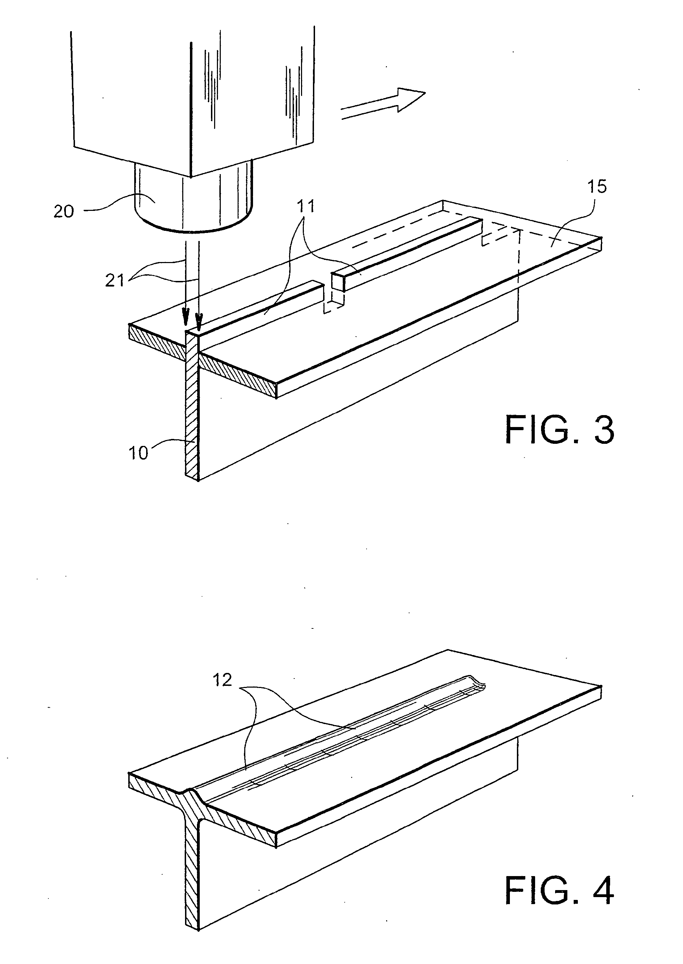

En référence à la figure 2, un premier assemblage pouvant être soudé avec le procédé selon l'invention comprend deux pièces : une pièce de pied 10 du T et une pièce de tête 15 du T. La pièce de pied 10 est une plaque rectangulaire d'épaisseur déterminée qui possède des crans 11 de longueur déterminée et espacés également de façon déterminée. En correspondance, la pièce de tête 15 possède des échancrures 16 dont la longueur et la largeur correspondent respectivement aux longueur et épaisseur des crans 11 de la pièce de pied 10. En référence à la figure 3, on comprend facilement que l'assemblage consiste à faire pénétrer les crans 11 de la pièce de pied 10 dans les échancrures 16 de la pièce de tête 15.

Une tête de soudage au laser 20 est placée à la verticale des crans 11 de l'assemblage. Cette tête de soudage laser 20 est du type bifocale, c'est-à-dire qu'elle peut émettre deux faisceaux laser 21, parallèles entre eux. La tête de soudage laser 20 est réglée pour que l'écartement des deux faisceaux laser 21 corresponde à un certain écart pour l'épaisseur de la pièce de pied 10. En d'autres termes, les deux faisceaux laser sont tangents chacun avec une surface de la pièce de pied 10.

Il est prévu d'effectuer le découpage des crans 11 de la pièce de pied et les échancrures 16 de la pièce de tête 15 au moyen d'un découpage laser, mais d'autres types de découpe peuvent être utilisés.

Le soudage sur les deux flancs du haut de la pièce de pied 10, le long et entre les crans 11, a donc lieu en une seule passe, par déplacement longitudinal de la tête de soudage au laser 20.

Les crans 11 ont une hauteur légèrement supérieure à l'épaisseur de la pièce de tête 15 de manière à dépasser légèrement. Comme le montre la figure 4, une fois le soudage effectué, ces crans 11, ayant constitué un métal d'apport, sont transformés en légères bosses 12. Plus la hauteur des crans 11 est importante avant le soudage, plus la hauteur du bourrelet après soudage sera importante.

### Deuxième assemblage

La figure 5 montre un deuxième montage possible pour réaliser le T par fixation au moyen de soudage laser. On utilise toujours une pièce de pied 30, mais sans cran. Deux pièces de têtes 35D et 35G sont placées contre la pièce de tête 30, dans sa partie supérieure. Elles y sont fixées sur une de leur tranche et font donc saillie de celle-ci perpendiculairement. De plus, elles sont alignées l'une par rapport à l'autre.

Un soudage bifocal, tel qu'il a été mentionné pour l'assemblage précédent, peut être utilisé de manière identique, les deux axes des deux rayons laser 21 devant être parallèles chacun à une face verticale de la pièce de pied 30, le soudage se faisant sur toute la longueur de l'assemblage.

L'avantage principal de l'invention est que le soudage se fait par une seule passe, sans apport de fils de métal. On obtient ainsi un cordon de soudure sans défaut de forme et les risques de déformation dans l'assemblage, lors de la soudure, sont minimisés.

## Revendications

1. Procédé de soudage par laser d'un assemblage de pièces métalliques disposées en T, le pied du T étant constitué par une plaque de pied (10, 30), à surfaces parallèles, l'assemblage étant accessible que du côté de la tête du T par une surface externe, le procédé comportant les phases suivantes :
- assemblage en T des pièces l'une contre l'autre,
**caractérisé en ce que** l'assemblage par est soudé par laser la surface extérieure de la tête du T par deux soudures simultanées, parallèles entre elles et perpendiculaires à la surface supérieure de la tête du T, de manière à ce que les deux axes de soudage (21) soient tangents chacun avec une des surfaces de la plaque formant le pied du T (10, 30).

2. Procédé de soudage par laser selon la revendication 1, **caractérisé en ce que** les deux soudures sont effectuées simultanément par une tête de soudage bifocale (20).

3. Procédé de soudage par laser selon la revendication 1, **caractérisé en ce que** la plaque de pied (10) possède des crans (11) de longueur et d'épaisseur déterminées, l'assemblage possédant une deuxième pièce dite de tête (15) constituant la tête du T et possédant des échancrures (16) de longueurs et d'épaisseurs correspondant à celles des crans (11).

4. Procédé de soudage par laser selon la revendication 3, **caractérisé en ce que** la hauteur des crans (11) est légèrement supérieure à l'épaisseur de la pièce de tête (15).

5. Procédé de soudage par laser selon la revendication 1, **caractérisé en ce que** la tête du T est constituée de deux plaques (35D, 35G), placées perpendiculairement de part et d'autre de la plaque de pied (30) du T, sur leur tranche.

## Claims

1. Laser welding method for the assembly of metal parts arranged in the shape of a T, the stem of the T being formed of a stem plate (10, 30) with parallel surfaces, the assembly only being accessible from the head side of the T, through an external surface, the method comprising the following phases:
- T assembly of parts adjacent to each other,
**characterized in that** the assembly is laser welded through the outer surface of the T head, by two welds made at the same time and parallel to each other and perpendicular to the top surface of the head of the T, such that each of the two welding axes (21) is tangent to one of the surfaces of the plate (10, 30) forming the stem of the T.

2. Laser welding method according to claim 1, **characterized in that** the two welds are made simultaneously with a bifocal welding head (20).

3. Laser welding method according to claim 1, **characterized in that** the stem plate (10) is provided with tabs (11) with a determined length and thickness, and the assembly includes a second part called the head part. (15) forming the head of the T and provided with sloots (16) with length and thickness corresponding to the dimensions of the tabs (11).

4. Laser welding method according to claim 3, **characterized in that** the height of the tabs (11) is slightly more than the thickness of the head part (15).

5. Laser welding method according to claim 1, **characterized in that** the head of the T is formed of two plates (35D, 35G) installed perpendicular to one plate of the T stem (30) and with their edge on each and other side of the stem plate.

## Patentansprüche

1. Verfahren zum Laserschweißen einer Gesamtanordnung von T-förmig angeordneten Metallteilen, wobei der Fuß des T von einer Fußplatte (10, 30) mit parallelen Oberflächen gebildet wird, wobei die Gesamtanordnung nur vom Kopf des T her durch eine Außenseite zugänglich ist, wobei das Verfahren darin besteht, die einzelnen Teile zu einer T-förmigen Gesamtanordnung aneinanderzufügen,
**dadurch gekennzeichnet,**
**dass** die Gesamtanordnung durch die Außenseite des Kopfs des T mit zwei gleichzeitigen Schweißungen, die parallel zueinander und im rechten Winkel zu der Oberseite des Kopfs des T verlaufen, so dass die beiden Schweißachsen (21) jeweils tangential zu einer der Oberflächen der Platte verlaufen, die den Fuß des T (10, 30) bildet.

2. Laserschweißverfahren nach Anspruch 1,
**dadurch gekennzeichnet,**
**dass** die beiden Schweißungen gleichzeitig durch einen bifokalen Schweißkopf (20) ausgeführt werden.

3. Laserschweißverfahren nach Anspruch 1,
**dadurch gekennzeichnet,**
**dass** die Fußplatte (10) Rippen (11) mit bestimmter Länge und Breite aufweist, wobei die Gesamtanordnung ein zweites Teil, Kopf (15) genannt, aufweist, das den Kopf des T bildet und Einschnitte (16) aufweist, deren Längen und Weiten denen der Rippen (11) entsprechen.

4. Laserschweißverfahren nach Anspruch 3,
**dadurch gekennzeichnet,**
**dass** die Höhe der Rippen (11) etwas größer ist als die Dicke des Kopfteils (15).

5. Laserschweißverfahren nach Anspruch 1,
**dadurch gekennzeichnet,**
**dass** der Kopf des T von zwei Platten (35D, 35G) gebildet wird, die zu beiden Seiten der Fußplatte (30) des T im rechten Winkel dazu mit ihrer Schmalseite angebracht sind.
